# EUROPÄISCHE PATENTSCHRIFT

(11) **EP 0 991 873 B1**
(45) Veröffentlichungstag und Bekanntmachung des Hinweises auf die Patenterteilung: **19.02.2003**
(21) Anmeldenummer: 98916953.7
(22) Anmeldetag: 14.03.1998
(51) Int. Cl.: F16D 69/02, C04B 35/80

(54) **REIBEINHEIT ZUM REIBENDEN EINGRIFF MIT EINEM GEGENKÖRPER SOWIE VERFAHREN ZUR HERSTELLUNG EINER SOLCHEN REIBEINHEIT**
FRICTION UNIT FOR FRICTION CONTACT WITH A COUNTER BODY AND METHOD FOR THE PRODUCTION OF SAID FRICTION UNIT
UNITE DE FRICTION POUR CONTACT FRICTIONNEL AVEC UN CORPS ANTAGONISTE, AINSI QUE PROCEDE POUR LA FABRICATION D'UNE TELLE UNITE DE FRICTION

(30) Priorität: 22.05.1997 DE 19721473
(43) Veröffentlichungstag der Anmeldung: 12.04.2000
(73) Patentinhaber: Deutsches Zentrum für Luft- und Raumfahrt e.V., 53175 Bonn (DE)
(72) Erfinder: KRENKEL, Walter, D-71272 Renningen (DE); HENKE, Thilo, D-70329 Stuttgart (DE)
(74) Vertreter: Grimm, Ekkehard, Dipl.-Phys.
(86) Internationale Anmeldenummer: EP9801494
(87) Internationale Veröffentlichungsnummer: WO98053219

(56) Entgegenhaltungen:
- EP-A- 0 721 835
- EP-A- 0 835 853
- WO-A-97/22815
- DE-A- 3 602 132
- DE-A- 4 438 456
- GB-A- 2 013 294

## Beschreibung

Die vorliegende Erfindung betrifft eine Reibeinheit zum reibenden Eingriff mit einem Gegenkörper, insbesondere Brems- oder Kupplungskörper, mit einem Kernkörper und mindestens einem mit diesem fest verbundenen Reibkörper mit einer frei zugänglichen Reibfläche, wobei der Kernkörper und der Reibkörper im wesentlichen aus einem mit Kohlenstoff-Fasern verstärktem keramisierten Verbundwerkstoff gebildet sind.

Weiterhin betrifft die Erfindung ein Verfahren zur Herstellung einer Reibeinheit zum reibenden Eingriff mit einem Gegenkörper, insbesondere von Brems- oder Kupplungskörpern, bei dem ein erster und mindestens ein zweiter kohlenstoff-faserverstärkter, poröser Kohlenstoffkörper bereitgestellt werden, wobei der eine Kohlenstoffkörper zur Bildung eines Reibkörpers und der andere Körper zur Bildung eines Kernkörpers dient, die vor oder nach ihrem Zusammenbau mit flüssigem Silizium bei einer Temperatur im Bereich von 1410°C bis 1700°C in einer eingestellten Atmosphäre infiltriert werden.

Eine Reibeinheit der vorstehend angegebenen Art ist aus der DE-A1 44 38 456 bekannt. Der prinzipielle Aufbau dieser Reibeinheit ist darin zu sehen, daß sie zweiteilig aus einem Kernkörper und mindestens einem Reibkörper besteht, wobei der Reibkörper mit dem Kernkörper auf seiner der Reibfläche abgekehrten Seite verbunden ist. Die Verbindung beider Körper erfolgt über eine hochtemperaturbeständige Verbindungsschicht, die vorzugsweise mindestens 30 Vol.-% Siliziumkarbid enthält. Ein grundsätzliches Problem solcher Reibeinheiten, beispielsweise von Bremsscheiben bzw. bei Bremsscheiben überhaupt, ist dasjenige, die auf der Reibfläche gebildete Wärme schnell abzuführen. Aus diesem Grund weist der Körper einer solchen Bremsscheibe Hohlräume auf, die ausreichend Kühlluft zu der Innenseite des Reibkörpers zuführen. Aufgrund dieser Kühlkanäle und Hohlräume wird eine große Oberfläche bereitgestellt, um Wärme an die Umgebungsluft abzuführen. Voraussetzung für eine ausreichende Kühlung ist demnach, daß eine solche Reibeinheit bzw. Bremsscheibe von der Innenseite über die Hohlräume belüftet wird.

Ausgehend von dem vorstehend angegebenen Stand der Technik liegt der Erfindung die Aufgabe zugrunde, eine Reibeinheit, insbesondere eine Bremsscheibe, der eingangs genannten Art derart weiterzubilden, daß die auf der Reibfläche entstehende Wärme effektiv abgeführt wird.

Weiterhin ist es Aufgabe der Erfindung, ein Verfahren der eingangs genannten Art derart weiterzubilden, daß eine solche Reibeinheit unter einem einfach handhabbaren Verfahrensablauf herstellbar ist.

Diese Aufgabe wird bei einer Reibeinheit mit den Merkmalen, wie sie eingangs angegeben sind, dadurch gelöst, daß zumindest im Reibbereich mindestens 50% der Kohlenstoff-Fasern des Reibkörpers in ihrer Längserstreckung derart ausgerichtet sind, daß sie mit der Flächennormalen der Reibfläche einen Winkel ≤ 45° einschließen.

Verfahrensgemäß wird die Aufgabe, ausgehend von einem Verfahren mit den eingangs genannten Merkmalen, dadurch gelöst, daß für den Reibkörper eine Vorform hergestellt wird, in der mindestens 50% der Kohlenstoff-Fasern zu einer Längsachse derart ausgerichtet sind, daß sie mit der Längsachse einen Winkel ≤ 45° einschließen, daß dieser Vorkörper in Scheiben im wesentlichen senkrecht zu seiner Längsachse unterteilt wird, mit einer Scheibendicke, die der Dicke des Reibkörpers entspricht, und daß die Scheibe(n) auf den Kernkörper aufgelegt wird (werden) derart, daß die Längsachse in Richtung der Flächennormalen der zu bildenden Reibfläche verläuft.

Mit diesen erfindungsgemäßen Maßnahmen werden die Kohlenstoff-Fasern des Reibkörpers im Bereich der Reibfläche bevorzugt so orientiert, daß sie im wesentlichen in Richtung der Flächennormalen der Reibfläche verlaufen und somit eine bevorzugte Wärmetransportrichtung von der Reibfläche weg aufweisen. Insofern wird ein definierter Wärmegradient von der Reibfläche zu dem Kernkörper hin eingestellt. Durch den schnellen Abtransport der Wärme über die im wesentlichen senkrecht zur Reibfläche verlaufenden Fasern kann der Temperaturanstieg beim reibenden Eingriff der Reibfläche mit einem Gegenkörper in dem zu der Reibfläche nahen Bereich des Reibkörpers gering gehalten werden, so daß die Reibeigenschaften, die stark von der Temperatur an der Reiboberfläche abhängig sind, im wesentlichen bei den unterschiedlichen Betriebsbedingungen und Belastungen beibehalten werden. Weiterhin wird der Verschleiß an der Reiboberfläche gering gehalten, der ansonsten mit zunehmender Reibflächentemperatur stark ansteigt. Der zumindest zweiteilige Aufbau der Reibeinheit mit einem Reibkörper und einem Kernkörper hat den Vorteil, daß die Reibeinheit mit der Orientierung der Fasern für einen optimalen Wärmeabtransport konfiguriert werden kann, während der Kernkörper so abgestimmt wird, daß er zum einen eine hohe Festigkeit aufweist, zum anderen aber dennoch die Wärme, die von dem Reibkörper abgeführt wird, aufnimmt und sie über seine freien Oberflächen an die Außenumgebung abgibt. Die mindestens zwei Kohlenstoffkörper, aus denen die Reibeinheit aufgebaut wird, können zum einen als sogenannte Vorformen gefertigt werden, indem zunächst das Fasergerüst erstellt wird,mit der erfindungsgemäßen Faserorientierung, dann die beiden Körper zusammengesetzt werden, um dann anschließend die gesamte Struktur, die durch eine zuvor gebildete Mikrorißstruktur durchzogen wird, mit flüssigem Silizium zu infiltrieren. Hierdurch ergibt sich eine homogene Struktur des Matrixmaterials. Eine andere Verfahrensweise ist diejenige, sowohl den Kernkörper als auch den oder die Reibkörper gesondert herzustellen, zu keramisieren und dann mit speziellen Verbindungstechniken zu der Endstruktur zusammenzufügen. Die erstere Verfahrensweise ist allerdings als die bevorzugtere anzusehen.

Schließlich bietet der zweiteilige Aufbau zusätzlich den Vorteil, daß, unter geeigneter Materialauswahl und Verbindungstechniken zwischen dem Reibkörper und dem Kernkörper, der Reibkörper nach einer zu starken Abnutzung durch einen neuen Reibkörper mit ausreichender Dicke ersetzt werden kann, der dann an dem ursprünglichen Kernkörper wieder fest angebracht wird, wozu sich eine Verbindungstechnik mittels einer Siliziumkarbid bildenden Paste anbietet, die unter Wärmeeinwirkung keramisiert wird.

Der Anteil solcher senkrecht zur Oberfläche bzw. in Richtung der Flächennormalen der Reibfläche verlaufenden Fasern sollte mehr als 75% betragen; vorzugsweise liegt dieser Anteil sogar bei über 90%. Bevorzugt beträgt der Winkel zwischen der Flächennormalen und der Längsachse der Fasern des Reibkörpers < 30°, noch bevorzugter maximal 10°; im Idealfall würden diese Fasern senkrecht zur Reibfläche oder parallel zu der Flächennormale der Reibfläche enden. Im Idealkörper werden die Faser durch Faserbündel gebildet, deren Fasern im wesentlichen zueinander parallel ausgerichtet sind und in Richtung der Flächennormalen verlaufend, zumindest im Oberflächenbereich der Reibfläche, orientiert sind. Hierdurch wird eine optimierte Wärmeleitung von der Reibfläche weg zu dem Kernkörper hin erzielt.

Im Gegensatz zu dem Aufbau des Reibkörpers, wo die Fasern im wesentlichen parallel zu der Flächennormalen der Reibfläche verlaufen, sollten die Fasern im Kernkörper in ihrer Längserstreckung im wesentlichen parallel zur Reibfläche verlaufen, zumindest ein Anteil von mindestens 50% der Fasern im Kernkörper. Dadurch wird die von der Reibfläche und dem Reibkörper abgeführte Wärme in radialer Richtung über den gesamten Kernkörper verteilt, so daß die Wärme über die Außenflächen des Kernkörpers an die Umgebung abgeführt werden kann. Hierdurch entsteht ein definierter Wärmegradient von der Reibfläche des Reibkörpers zu den freien Flächen des Kernkörpers hin.

Eine noch bessere Wärmeabfuhr von der Reibfläche kann dadurch erreicht werden, daß die Kohlenstoff-Fasern des Reibkörpers eine höhere Wärmeleitfähigkeit aufweisen als die Kohlenstoff-Fasern des Kernkörpers. Als solche Fasern, vorzugsweise Endlos-Fasern, aus denen der Kernkörper aufgebaut wird, um diese höhere Wärmeleitfähigkeit zu erzielen, kommen bevorzugt Hoch-Modul-Fasern mit einem Zug-E-Modul größer als 300 GPa in Betracht, insbesondere solche auf Polyacrylnitril-(PAN-) oder Pechbasis.

Die erfindungsgemäße Reibeinheit wird bevorzugt aus einem Kohlenstoff-Faserkörper mit der jeweiligen, bevorzugten Orientierung der Fasern im Bereich des Reibkörpers und der Kernkörper aufgebaut, wobei die Fasern des Reibkörpers und/oder des Kernkörpers in einer weiteren, bevorzugten Ausbildung in Siliziumkarbid eingebettet werden. Dieses Siliziumkarbid wird während der Herstellung der Reibeinheit in Form von flüssigem Silizium in eine Mikrorißstruktur im Bereich des vorbereiteten Kohlenstoff-Fasergerüsts infiltriert und unter Wärmeeinwirkung mit Kohlenstoff zu Siliziumkarbid umgewandelt. Auf diese Art und Weise ist es möglich, einen porösen Vorkörper als Rohling zu fertigen, der die jeweiligen Orientierungen der Fasern der Reibkörper und der Kernkörper in ihren Vorzugsrichtungen umfaßt, wonach dann die Einheit mit der Infiltration von Silizium und der Wärmebehandlung zu einem festen Verbundkörper fertiggestellt wird.

Grundsätzlich gestaltet sich die Herstellung des Reibkörpers schwierig, wenn ein hoher Anteil der Fasern parallel zueinander verlaufen soll mit einer Ausrichtung derart, daß ein Großteil der Fasern, vorzugsweise Endlos-Fasern, senkrecht zu der Reibfläche verlaufend enden. Um dies in einfacher Weise zu erreichen, wird der Reibkörper aus Segmentteilen aufgebaut, die auf den Kernkörper aufgelegt werden. Bei einer Scheibenform sollten vorzugsweise solche Segmente Kreissegmente sein, die sich von einem gemeinsamen Mittelpunkt, bei dem es sich um die Drehachse der Scheibe handeln kann, radial nach außen erstrecken. Hierdurch wird ein gleichmäßiger, punktsymmetrischer Aufbau erzielt, so daß eine gleichmäßige Wärmeverteilung über die Reibfläche des Reibkörpers erreicht werden kann. Diese Segmentteile müssen nicht nur an dem Kernkörper ausreichend verankert werden, sondern sollten auch miteinander form- und/oder kraftschlüssig verbunden werden. Hierzu werden die einzelnen, aneinandergrenzenden Segmentteile miteinander mittels Vertiefung und/oder Nuten und Stegen und/oder Zapfen verbunden, die ineinandergreifen, so daß ein einheitliches, festes Gebilde erzielt wird, das den Reibkörper darstellt. Die einzelnen Segmentteile können auch mittels dünner Bolzen, die sich durch entsprechende Bohrungen der Segmentteile erstrecken, zusätzlich befestigt werden. Diese Verfahrensweise ist beispielsweise bei rechteckigen Reibeinheiten, wie beispielsweise Bremsklötzen, möglich und geeignet.

Unter dem Begriff Reibeinheit, wie er hier verwendet wird, sind nicht nur Bremsscheiben und Bremsklötze zu verstehen, sondern auch Reibbeläge, die für Kupplungen, oder dergleichen, eingesetzt werden.

Weitere vorteilhafte Ausgestaltungen des verfahrensgemäßen Aufbaus ergeben sich aus den verfahrensgemäßen Unteransprüchen.

Weitere Einzelheiten und Merkmale der Erfindung werden aus der nachfolgenden Beschreibung von Ausführungsbeispielen anhand der Zeichnung ersichtlich. In der Zeichnung zeigt
- Figur 1: eine perspektivische, schematische Darstellung einer Reibeinheit in Form einer Bremsscheibe, die mit einem Kernkörper und zwei Reibkörpern aufgebaut ist, wobei der strukturelle Aufbau der Reibkörper angedeutet gezeigt ist,
- Figur 2: einen Schnitt entlang der Schnittlinie II-II in Figur 1,
- Figur 3: eine schematische Darstellung eines plattenförmigen Aufbaus einer Reibeinheit mit einem Kernkörper und einem Reibkörper,
- Figur 4: schematisch einen Längsschnitt durch einen segmentierten Reibkörper, um verschiedene Verbindungsarten zwischen benachbarten Segmenten zu zeigen,
- Figur 5: eine Ausführungsform eines Vorkörpers zur Herstellung von Segmenten, die zum Aufbau eines Reibkörpers verwendet werden,
- Figur 6: den Aufbau eines Reibkörpers aus Segmenten, die durch Unterteilen eines Vorkörpers, wie er in Figur 5 dargestellt ist, erhalten sind,
- Figur 7: einen Vorkörper entsprechend der Figur 5, wobei aus diesem Vorkörper Kreissegmentabschnitte gefertigt werden, die dazu herangezogen werden, den Reibkörper einer Bremsscheibe aufzubauen, wie dieser in Figur 1 dargestellt ist, und
- Figur 8: einen weiteren Vorkörper, der in seinem grundsätzlichen Aufbau der Ausführungsform der Figuren 5 und 7 entspricht, wobei aus diesem Vorkörper scheibenförmige Segmente mit einer Faserorientierung im wesentlichen unter 45° zu der zu bildenden Reibfläche herausgeschnitten werden.

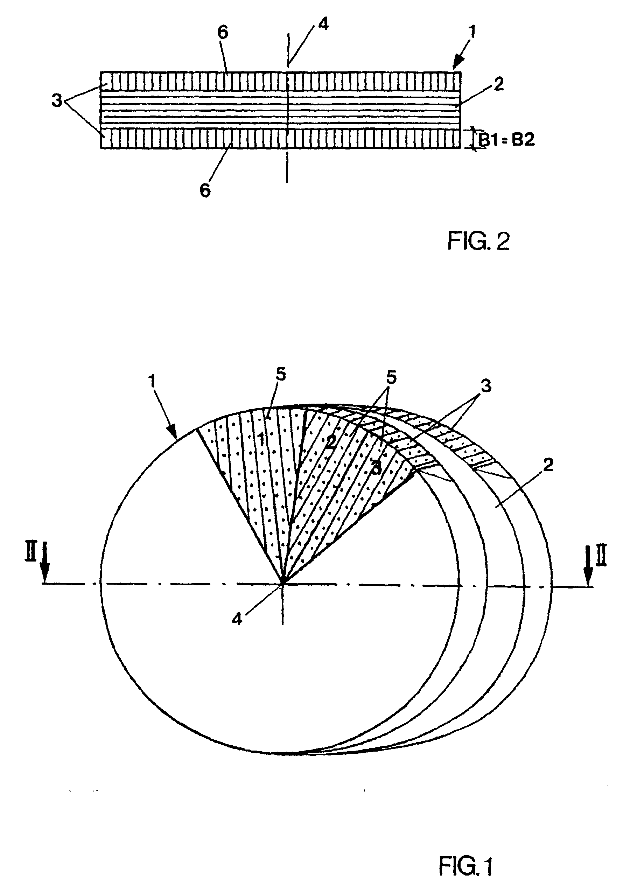

In Figur 1 ist schematisch eine Bremsscheibe 1 dargestellt, die dreiteilig aus einem mittleren, scheibenförmigen Kernkörper 2 und zwei die axialen Flächen des Kernkörpers belegenden Reibkörpern 3 zusammengesetzt ist. Die Drehachse bzw. der Mittelpunkt der Bremsscheibe ist mit dem Bezugszeichen 4 bezeichnet. Wie in Figur 1 angedeutet ist, sind die Reibkörper 3 aus einzelnen Kreis-Segmenten 5 aufgebaut, die sich von dem Mittelpunkt 4 aus erstrecken und einen Winkelabschnitt von 45°, oder geringer, belegen.

Der Kernkörper 2 und die Reibkörper 3 dieser Bremsscheibe 1 sind aus einem mit Kohlenstoff-Fasern verstärktem, keramisierten Verbundwerkstoff gebildet. Wesentlich hierbei ist, daß in dem Kernkörper 2 die Kohlenstoff-Fasern im wesentlichen senkrecht zu der Drehachse 4 bzw. parallel zu der Reibfläche 6 der Reibkörper 3 verlaufen, während die Kohlenstoff-Fasern in den Reibkörpern 3 parallel zur Achse 4 bzw. parallel zu der auf der Reibfläche 3 bestehenden Flächennormalen ausgerichtet sind. In Figur 2 ist hierbei schematisch der Idealfall dargestellt, d.h. ein möglichst hoher Anteil der Fasern in den Reibkörpern 3 soll die gezeigte Orientierung aufweisen, während die Orientierung der Fasern in dem Kernkörper 2 senkrecht dazu liegt. Durch diese Faserorientierung wird die an der Oberfläche bzw. der Reibfläche 6 entstehende Wärme beim reibenden Eingriff der Bremsscheibe mit einem Gegenkörper (Bremsklotz) zu dem Kernkörper 2 hin abgeführt werden, der die Wärme, durch die definierte Faserorientierung, radial nach außen abgeführt. Dieser Wärmefluß kann dadurch unterstützt werden, daß für die Kohlenstoff-Fasern solche eingesetzt sind, die gut wärmeleitend sind. Geeignet sind dabei Hoch-Modul-Fasern mit einem Zug-E-Modul > 300 GPa. Der Wärmegradient bzw. die Leitung der Wärme von der Reibfläche 6 weg kann bereits dadurch erzielt werden, daß mindestens 50% der Kohlenstoff-Fasern in ihrer Längserstreckung derart ausgerichtet sind, daß sie mit der Flächennormalen der Reibfläche 6 einen Winkel ≤ 45° einschließen, wobei allerdings kleinere Winkel zur Flächennormalen zu bevorzugen sind. Die ideale Ausrichtung der Fasern senkrecht zur Reibfläche 6 bzw. parallel zu der Flächennormalen kann zum einen durch den Anteil der Fasern, die zu dieser Richtung ausgerichtet sind, eingestellt werden, aber auch durch einen möglichst geringen Winkel abweichend zu dieser senkrecht zur Reibfläche 6 verlaufenden Orientierung.

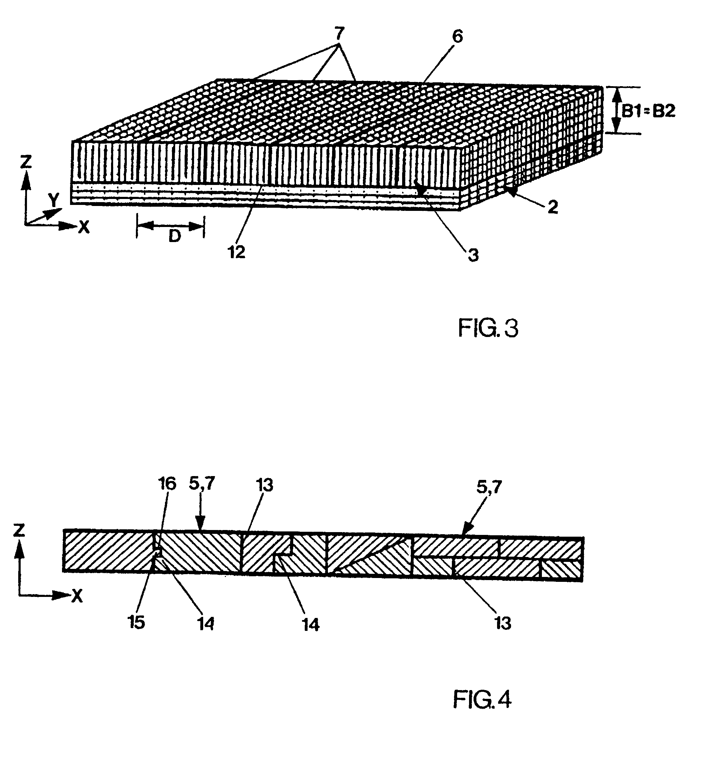

in Figur 3 ist nun ein Aufbau eines Reibkörpers, beispielsweise eines Bremsklotzes, dargestellt, der zweiteilig aus einem Kernkörper 2 und einem Reibkörper 3 aufgebaut ist. Wiederum ist der Reibkörper 3 aus einzelnen Segmenten, allerdings aus Rechteck-Segmenten 7, aufgebaut, wie auf der vorderen Stirnfläche in Figur 3 des Reibkörpers 3 zu erkennen ist. Die Mehrzahl der Kohlenstoff-Fasern des Reibkörpers 3 ist so ausgerichtet, daß sie senkrecht zu der Reibfläche 6 verlaufen.

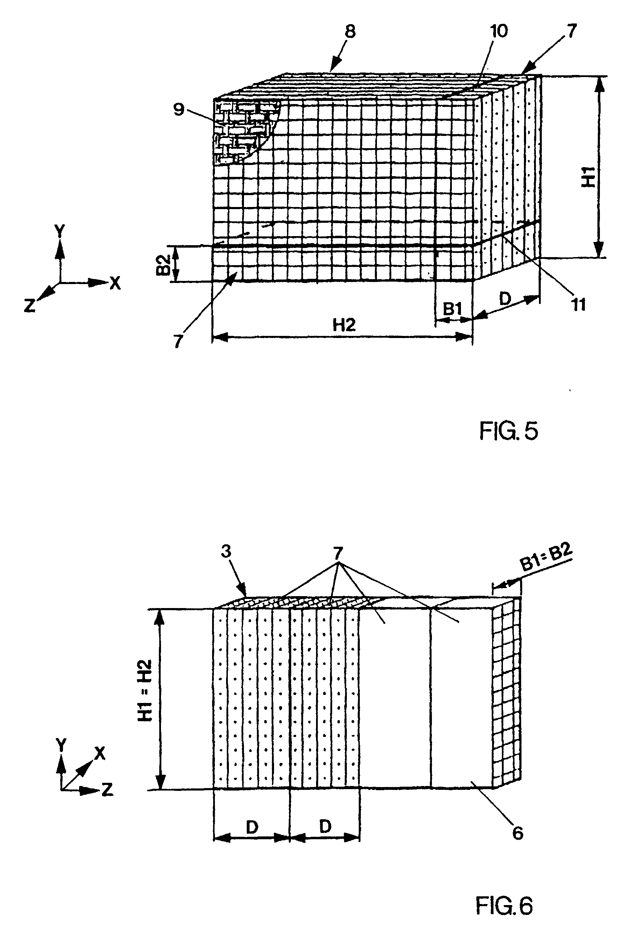

Da es relativ aufwendig ist, unter üblichen Herstelltechniken flache, plattenförmige Teile herzustellen, bei denen die Mehrzahl der Fasern in der Dicken-Richtung der Platte verläuft, sind in den Figuren 5, 7 und 8 verschiedene Möglichkeiten gezeigt, die Segmente 5 oder 7 für die Reibkörper 3 herzustellen.

Zunächst wird ein kohlenstoff-faserverstärkter, poröser Kohlenstoffkörper bereitgestellt, der eine bevorzugte Orientierung der Kohlenstoff-Fasern in einer gegebenen Richtung aufweist, beispielsweise in X-Richtung, betrachtet man den Vorkörper 8 der Figur 5. Diese Faserorientierung ist schematisch in Figur 5 zu sehen, wobei an dem Detail-Ausschnitt 9 zu erkennen ist, daß dieser Vorkörper 8 aus mehreren Gewebelagen aus Kohlenstoff-Fasern, in der Z-Richtung geschichtet, aufgebaut ist. Dieser Kohlenstoff-Faserkörper erhält dann eine geeignete Mikrorißstruktur, die vorzugsweise dadurch erzeugt wird, daß das Kohlenstoff-Fasergerüst mit einem Polymer getränkt und anschließend eine Pyrolyse durchgeführt wird.

Nachdem ein Vorkörper hergestellt ist, wie er in Figur 5 dargestellt ist, werden einzelne Rechteck-Segmente 7 entlang der in der Y-Z-Richtung verlaufenden Schnittlinie 10 abgetrennt. Anschließend werden diese Rechteck-Segmente 7 mit ihren Stirnflächen, die bei dem Vorkörper 8 der Figur 5 in der X-Y-Richtung liegen, aneinandergefügt, wie dies in Figur 6 dargestellt ist. Entsprechend der Dicke D des Vorkörpers 8 entsteht dadurch ein plattenförmiger Reibkörper 3, der eine Länge von 4D, eine Höhe H1 sowie eine Breite B1 besitzt (diese Bezeichnungen sind konsistent in den Figuren 5 und 6 angegeben). Wie weiterhin anhand der Figur 5 zu sehen ist, können die Rechteck-Segmente auch durch aus dem Vorkörper 8 durch Abtrennen von Rechteck-Segmenten 7 entlang der Schnittlinien 11, die in der X-Z-Richtung verläuft, erhalten werden, wobei dann diese einzelnen Rechteck-Segmente wiederum an ihren Längsseiten miteinander verbunden werden, so daß sich dann der Reibkörper 3 der Figur 6 mit einer Höhe H2, einer Breite B2 und einer Länge 4D ergibt. Es wird allerdings ersichtlich, daß sich unter Anwendung der letzteren Verfahrensweise des Aufbaus des Vorkörpers 8 ein geringerer Anteil der Kohlenstoff-Fasern der einzelnen Rechteck-Segmente 7 senkrecht zu der Reibfläche erstreckt als dann, wenn die einzelnen Rechteck-Segmente aus dem Vorkörper 8 durch Unterteilung der Rechteck-Segmente 7 entlang der Schnittlinie 10 gebildet werden.

Ein Reibkörper 3, wie er in Figur 6 gezeigt ist, wird dann auf einem Kernkörper 2 befestigt, wie dies in Figur 3 dargestellt ist. Danach wird die Mikrorißstruktur mit flüssigem Silizium infiltriert, und zwar unter Wärmeeinwirkung mit Temperaturen im Bereich von 1410°C bis 1700°C in einer eingestellten Atmosphäre, so daß sich das infiltrierte Silizium mit Kohlenstoff, und zwar unter der Wärmeeinwirkung, zu Siliziumkarbid umwandelt. Mit dieser Verfahrenstechnik ist es möglich, zunächst einen porösen Kohlenstoffkörper als Rohling zu fertigen, der eine definierte Form aufweist, um ihn erst dann nach der Infiltration von Silizium und der Wärmebehandlung zu einem Verbundkörper zu verfestigen bzw. zu keramisieren, bei dem die Kohlenstoff-Fasern in Siliziumkarbid eingebettet sind. Gleichzeitig erfolgt die Verbindung zwischen dem Kernkörper 2 und dem Reibkörper 3 mit einer Verbindungsschicht 12.

Falls die Teile bereits keramisiert sind, bevor sie zusammengefügt werden, bietet sich zur Verbindung der Bauteile eine Siliziumkarbid-Verbindungsschicht an. Zur Bildung dieser Schicht kann eine an Kohlenstoff reiche Paste unter Zugabe von pulverförmigem und/oder flüssigem Silizium verwendet werden; dies ergibt ein mit dem Material des Kernkörpers 2 und des Reibkörpers 3 artgleiches und somit kompatibles Material, so daß eine hochfeste Verbindung erzielt wird.

Die vorstehend angegebene Technik und Verfahrensweise zum Aufbau der Reibeinheit ist auch dazu geeignet, den einen Teil zu keramisieren und mit einem porösen Vorformkörper, beispielsweise dem Reibkörper, zu verbinden, bevor dann der Reibkörper mit flüssigem Silizium infiltriert wird. Dieser Ablauf kann zum Beispiel dann von Vorteil sein, wenn eine abgenutzte Reibeinheit mit einem neuen Reibkörper versehen werden soll.

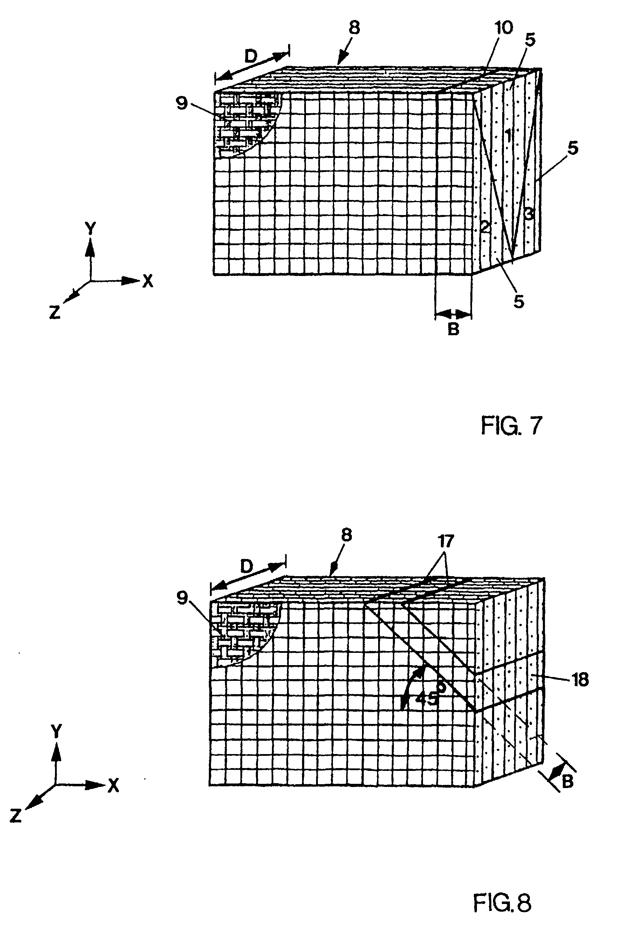

Um Kreis-Segmente 5 herzustellen, mit denen ein Reibkörper 3 aufgebaut werden kann, der sich für die in Figur 1 gezeigte Bremsscheibe 1 eignet, wird wiederum, in einer bevorzugten Verfahrensweise, ein Vorkörper 8 aufgebaut, der in seinem Aufbau dem Vorkörper 8 entspricht, der anhand der Figur 5 vorstehend erläutert ist. Aus diesem Vorkörper 8 werden, wie in Figur 7 angedeutet ist, entlang der Schnittlinie 10 (in der Y-Z-Richtung) Scheiben abgetrennt, die der Dicke D des Reibkörpers 3 entsprechen. Aus diesem zunächst rechteckigen Segment werden dann drei Kreis-Segmente 5 herausgeschnitten mit Schnitten, die in der X-Y-Richtung verlaufen. Wie anhand der Figur 7 zu erkennen ist, können aus einer rechteckigen Scheiben insgesamt drei Segmente 5 erhalten werden, ohne Abfälle zu erhalten. Diese Segmente 5 werden dann auf den Kernkörper 2 aufgelegt, wie dies anhand der Figur 1 gezeigt ist. Falls die Teile bereits keramisiert sind, kann die Verbindung der Segmente 5 an dem Kernkörper 2 wiederum mittels einer Siliziumkarbid bildenden Paste erfolgen. Die gleiche Verbindungstechnik kann auch dazu verwendet werden, die aneinanderstoßenden Stirnflächen benachbarter Segmente miteinander zu verbinden, um Verbundkörper zu erhalten, wie sie in den Figuren 1 und 3 dargestellt sind.

Es kann von Vorteil sein, die aneinanderstoßenden Stirnflächen 13 der Kreis-Segmente 5 oder der Rechteck-Segmente 7 kraft- und/oder formschlüssig miteinander zu verbinden. Hierzu sind in Figur 4 sind verschiedene Verbindungsmöglichkeiten dargestellt, wie beispielsweise eine Zapfen-Verbindung 14, wobei an dem einen Vorkörper beispielsweise ein Zapfen 15 gebildet ist, der in einer entsprechenden Nut 16 in den daran angrenzenden Vorkörper eingreift. Eine weitere Möglichkeit besteht auch darin, den Reibkörper 1 zu schichten, wie dies in der rechten Hälfte der Figur 4 schematisch dargestellt ist, in dem beispielsweise Segmente mit einer abgeschrägten Fläche keilförmig aufeinanderliegen oder die Segmente mit in X-Richtung versetzten Stirnflächen 13 in Z-Richtung geschichtet sind.

Während anhand der Figuren 5 und 7 die Bildung von Segmenten mit im wesentlichen senkrecht zu den Flächennormalen der Reibflächen verlaufenden Fasern gezeigt wurden, ist in Figur 8 eine Möglichkeit angedeutet, eine Faserorientierung zu der Flächennormalen einer Reibfläche 6 unter einem abweichenden Winkel herzustellen. Wie in Figur 8 gezeigt ist, können in den Vorkörper 8 Schnittlinien 17 gelegt werden, die unter 45° zu der X-Richtung verlaufen. Hierdurch ergeben sich Segmentplatten 18, bei denen die einzelnen Fasern unter 45° zu der Flächennormalen der zu erstellenden Reibfläche bzw. zu den Flächennormalen, die auf den Schnittflächen 17 stehen, verlaufen. In Figur 8 ist die Breite D angegeben, die der Breite bzw. Länge D in Figur 6 entspricht, so daß die Segmentplatten 18 der Darstellung der Figur 6 zugeordnet werden können. Natürlich können aus diesen Segmentplatten 18 auch Kreis-Segmentteile 5 hergestellt werden, wie dies anhand der Figur 7 erläutert ist.

## Patentansprüche

1. Reibeinheit zum reibenden Eingriff mit einem Gegenkörper, insbesondere Brems- oder Kupplungskörper, mit einem Kernkörper und mindestens einem mit diesem fest verbundenen Reibkörper mit einer frei zugänglichen Reibfläche, wobei der Kernkörper und der Reibkörper im wesentlichen aus einem mit Kohlenstoff-Fasern verstärktem keramisierten Verbundwerkstoff gebildet sind, **dadurch gekennzeichnet, daß** zumindest im Reibbereich (6) mindestens 50% der Kohlenstoff-Fasern des Reibkörpers (3) in ihrer Längserstreckung derart ausgerichtet sind, daß sie mit der Flächennormalen der Reibfläche (6) einen Winkel ≤ 45° einschließen.

2. Reibeinheit nach Anspruch 1, **dadurch gekennzeichnet, daß** der Anteil der im Reibbereich (6) ausgerichteten Kohlenstoff-Fasern mehr als 75% beträgt.

3. Reibeinheit nach Anspruch 2, **dadurch gekennzeichnet, daß** der Anteil mehr als 90% beträgt.

4. Reibeinheit nach Anspruch 1, **dadurch gekennzeichnet, daß** die Kohlenstoff-Fasern im Kernkörper (2) in ihrer Längserstreckung im wesentlichen parallel zur Reibfläche (2) verlaufen.

5. Reibeinheit nach Anspruch 1, **dadurch gekennzeichnet, daß** der eingeschlossene Winkel <30° beträgt.

6. Reibeinheit nach Anspruch 5, **dadurch gekennzeichnet, daß** der eingeschlossene Winkel maximal 10° beträgt.

7. Reibeinheit nach Anspruch 6, **dadurch gekennzeichnet, daß** die Kohlenstoff-Fasern des Reibkörpers (3) nahezu parallel zur Flächennormalen der Reibfläche (6) verlaufen.

8. Reibeinheit nach Anspruch 7, **dadurch gekennzeichnet, daß** nahezu die gesamten Kohlenstoff-Fasern des Reibkörpers (3) parallel zueinander und in Richtung der Flächennormalen der Reibfläche verlaufen.

9. Reibeinheit nach einem der Ansprüche 1 bis 8, **dadurch gekennzeichnet, daß** die Kohlenstoff-Fasern des Reibkörpers (3) eine höhere Wärmeleitfähigkeit aufweisen als die Kohlenstoff-Fasern des Kernkörpers (2).

10. Reibkörper nach Anspruch 9, **dadurch gekennzeichnet, daß** die Kohlenstoff-Fasern des Reibkörpers (3) Hoch-Modul-Fasern mit einem Zug-E-Modul > 300 GPa sind.

11. Reibeinheit nach einem der Ansprüche 1 bis 10, **dadurch gekennzeichnet, daß** die Kohlenstoff-Fasern des Reibkörpers (3) und/oder die des Kernkörpers (2) in Siliziumkarbid eingebettet sind, das durch Flüssiginfiltration von Silizium und Reaktion mit Kohlenstoff gebildet ist

12. Reibeinheit nach Anspruch 1, **dadurch gekennzeichnet, daß** der Reibkörper (3) aus Segmentteilen (5, 7), die auf dem Kernkörper (2) aufliegen, gebildet ist.

13. Reibeinheit nach Anspruch 12, **dadurch gekennzeichnet, daß** die Segmente Kreis-Segmente (5) sind, die sich von einem gemeinsamen Mittelpunkt (4) radial erstrecken.

14. Reibeinheit nach Anspruch 12, **dadurch gekennzeichnet, daß** aneinandergrenzende Segmentteile (5, 7) form- und/oder kraftschlüssig miteinander verbunden sind.

15. Reibeinheit nach Anspruch 14, **dadurch gekennzeichnet, daß** die Segmentteile (5, 7) mittels Vertiefungen und/oder Nuten (16) und Stegen und/oder Zapfen (15) miteinander verbunden sind.

16. Verfahren zur Herstellung einer Reibeinheit zum reibenden Eingriff mit einem Gegenkörper, insbesondere von Brems- oder Kupplungskörpern, bei dem ein erster und mindestens ein zweiter kohlenstoff-faserverstärkter, poröser Kohlenstoffkörper bereitgestellt werden, wobei der eine Kohlenstoffkörper zur Bildung eines Reibkörpers und der andere Körper zur Bildung eines Kernkörpers dient, die vor oder nach ihrem Zusammenbau mit flüssigem Silizium bei einer Temperatur im Bereich von 1410°C bis 1700°C in einer eingestellten Atmosphäre infiltriert werden, **dadurch gekennzeichnet, daß** für den Reibkörper eine Vorform hergestellt wird, in der mindestens 50% der Kohlenstoff-Fasern zu einer Längsachse derart ausgerichtet sind, daß sie mit der Längsachse einen Winkel ≤ 45° einschließen, daß dieser Vorkörper in Scheiben im wesentlichen senkrecht zu seiner Längsachse unterteilt wird, mit einer Scheibendicke, die der Dicke des Reibkörpers entspricht, und daß die Scheibe(n) auf den Kernkörper aufgelegt wird (werden) derart, daß die Längsachse in Richtung der Flächennormalen der zu bildenden Reibfläche verläuft.

17. Verfahren nach Anspruch 16, **dadurch gekennzeichnet, daß** der Kernkörper mit der (den) aufgelegten Scheibe(n) und/oder die Fügestellen zwischen benachbarten Scheiben über eine mindestens 30 Vol.-% Siliziumkarbid enthaltende Verbindungsschicht miteinander verbunden werden.

18. Verfahren nach Anspruch 16, **dadurch gekennzeichnet, daß** die Vorform aus zweidimensionalen Kohlenstoff-Faser-Geweben und/oder -Gewirken und/oder aus eindimensionalen Kohlenstoff-Faser-Gelegen geschichtet wird.

19. Verfahren nach Anspruch 18, **dadurch gekennzeichnet, daß** die Schichtung in Form eines Wickelkörpers vorgenommen wird, wobei die Achse des Wickelkörpers der Längsachse entspricht.

20. Verfahren nach Anspruch 16, **dadurch gekennzeichnet, daß** der Kernkörper mit aus der Vorform hergestellten Segmentteilen zur Bildung des Reibkörpers belegt wird.

## Claims

1. A friction unit for friction contact with a counter body, in particular a brake or clutch body, comprising a core body and at least one friction body firmly connected thereto and comprising a freely accessible friction surface, the core body and the friction body being essentially made from a ceramified composite material reinforced with carbon fibers, **characterized in that** at least in the friction area (6) at least 50% of the carbon fibers of the friction body (3) are oriented in their longitudinal extension such that they enclose an angle ≤ 45° with the normal to the surface of the friction surface (6).

2. The friction unit according to claim 1, **characterized in that** the amount of the carbon fibers oriented in the friction area (6) is more than 75%.

3. The friction unit according to claim 2, **characterized in that** the amount is more than 90%.

4. The friction unit according to claim 1, **characterized in that** the carbon fibers in the core body (2) in their longitudinal extension extend substantially in parallel with the friction surface (2).

5. The friction unit according to claim 1, **characterized in that** the enclosed angle is <30°.

6. The friction unit according to claim 5, **characterized in that** the enclosed angle is 10° at the most.

7. The friction unit according to claim 6, **characterized in that** the carbon fibers of the friction body (3) extend almost in parallel with the normal to the surface of the friction surface (6).

8. The friction unit according to claim 7, **characterized in that** almost all of the carbon fibers of the friction body (3) extend in parallel with one another and in the direction of the normal to the surface of the friction surface.

9. The friction unit according to any one of claims 1 to 8, **characterized in that** the carbon fibers of the friction body (3) have a higher thermal conductivity than the carbon fibers of the core body (2).

10. The friction body [sic] according to claim 9, **characterized in that** the carbon fibers of the friction body (3) are high modulus fibers with a modulus of elasticity in extension of > 300 GPa

11. The friction unit according to any one of claims 1 to 10, **characterized in that** the carbon fibers of the friction body (3) and/or those of the core body (2) are embedded in silicon carbide which is formed by liquid infiltration of silicon and reaction with carbon.

12. The friction unit according to claim 1, **characterized in that** the friction body (3) is formed from segment parts (5, 7) resting on the core body (2).

13. The friction unit according to claim 12, **characterized in that** the segments are circular segments (5) which extend radially from a common center (4).

14. The friction unit according to claim 12, **characterized in that** adjoining segment parts (5, 7) are interconnected in a positive and/or non-positive way.

15. The friction unit according to claim 14, **characterized in that** the segment parts (5, 7) are interconnected by means of recesses and/or grooves (16) and webs and/or pegs (15).

16. A method for producing a friction unit for friction contact with a counter body, in particular brake or clutch bodies, in which a first and at least one second carbon fiber-reinforced porous carbon body are provided, the one carbon body serving to form a friction body and the other body to form a core body which prior to or after assembly thereof are infiltrated with liquid silicon at a temperature ranging from 1410°C to 1700°C under a set atmosphere, **characterized in that** a preform is made for the friction body, in which preform at least 50% of the carbon fibers are oriented relative to a longitudinal axis such that they enclose an angle ≤ 45° with the longitudinal axis, that said pre-body is subdivided into disks substantially perpendicular to the longitudinal axis thereof, at a disk thickness corresponding to the thickness of the friction body, and that the disk(s) is(are) laid on the core body such that the longitudinal axis extends in the direction of the normal to the surface of the friction surface to be formed.

17. The method according to claim 16, **characterized in that** the core body is interconnected with the disk(s) laid thereon and/or the joints between neighboring disks via a connection layer containing at least 30% by vol. of silicon carbide.

18. The method according to claim 16, **characterized in that** the preform is arranged in layers of two dimensional carbon-fiber fabrics and/or knitted fabrics and/or of one-dimensional carbon fiber layings.

19. The method according to claim 18, **characterized in that** the layers are arranged in the form of a winding body, the axis of the winding body corresponding to the longitudinal axis.

20. The method according to claim 16, **characterized in that** the core body is covered with segment parts produced from the preform for forming the friction body.

## Revendications

1. Unité de friction pour contact frictionnel avec un corps antagoniste, en particulier un élément de frein ou d'embrayage, munie d'une âme et d'au moins un élément de friction solidaire de celle-ci avec une surface de friction librement accessible, l'âme et l'élément de friction étant formés sensiblement d'un matériau composite céramique renforcé à l'aide de fibres de carbone, **caractérisée en ce qu'**au moins dans la zone de friction (6) au moins 50% des fibres de carbone de l'élément de friction (3) sont alignées selon leur étendue longitudinale de telle sorte qu'elles font avec les normales à la surface de la surface de friction (6) un angle ≤ 45°.

2. Unité de friction selon la revendication 1, **caractérisée en ce que** la proportion des fibres de carbone alignée dans la zone de friction (6) s'élève à plus de 75%.

3. Unité de friction selon la revendication 2, **caractérisée en ce que** la proportion s'élève à plus de 90%.

4. Unité de friction selon la revendication 1, **caractérisée en ce que** les fibres de carbone dans l'âme (2) s'étendent selon leur étendue longitudinale sensiblement parallèlement à la surface de friction (6).

5. Unité de friction selon la revendication 1, **caractérisée en ce que** l'angle inclus est < 30°.

6. Unité de friction selon la revendication 5, **caractérisée en ce que** l'angle inclus s'élève au maximum à 10°.

7. Unité de friction selon la revendication 6, **caractérisée en ce que** les fibres de carbone de l'élément de friction (3) s'étendent presque parallèlement aux normales à la surface de la surface de friction (6).

8. Unité de friction selon la revendication 7, **caractérisée en ce que** presque la totalité des fibres de carbone de l'élément de friction (3) s'étendent parallèles entre elles et dans la direction des normales à la surface de la surface de friction.

9. Unité de friction selon une des revendications 1 à 8, **caractérisée en ce que** les fibres de carbone de l'élément de friction (3) présentent une conductibilité thermique plus élevée que les fibres de carbone de l'âme (2).

10. Unité de friction selon la revendication 9, **caractérisée en ce que** les fibres de carbone de l'élément de friction (3) sont des fibres à module élevé avec un module de résistance à la traction-E > 300 GPa.

11. Unité de friction selon une des revendications 1 à 10, **caractérisée en ce que** les fibres de carbone de l'élément de friction (3) et/ou celles de l'âme (2) sont noyées dans du carbure de silicium, qui est formé par infiltration liquide de silicium et réaction avec le carbone.

12. Unité de friction selon la revendication 1, **caractérisée en ce que** l'élément de friction (3) est formé de segments (5, 7), qui sont placés sur l'âme (2).

13. Unité de friction selon la revendication 12, **caractérisée en ce que** les segments sont des segments de cercle (5), qui s'étendent radialement depuis un centre commun (4).

14. Unité de friction selon la revendication 12, **caractérisée en ce que** des segments adjacents (5, 7) sont réunis par conformation et/ou verrouillage.

15. Unité de friction selon la revendication 14, **caractérisée en ce que** les segments (5, 7) sont réunis à l'aide de cavités et/ou de rainures (16) et de nervures et/ou tenons (15).

16. Procédé de fabrication d'une unité de friction pour contact frictionnel avec un corps antagoniste, en particulier éléments de frein ou d'embrayage, dans lequel un premier et au moins un second élément de carbone poreux, renforcés à l'aide de fibres de carbone sont préparés, le premier élément de carbone servant à la réalisation d'un élément de friction et l'autre élément à la formation d'une âme, qui sont infiltrés avant ou après leur assemblage avec du silicium liquide à une température comprise entre 1410°C et 1700°C sous atmosphère contrôlée, **caractérisé en ce que** pour l'élément de friction une préforme est fabriquée, dans laquelle au moins 50% des fibres de carbone sont dirigées selon un axe longitudinal de telle sorte qu'elles font avec l'axe longitudinal un angle ≤ 45°, **en ce que** cette préforme est divisée en disques sensiblement perpendiculairement à son axe longitudinal, avec une épaisseur de disque qui correspond à l'épaisseur de l'élément de friction, et **en ce que** le ou les disque(s) est(sont) posé(s) sur l'âme de telle sorte que l'âme longitudinale s'étend en direction des normales à la surface de la surface de friction à former.

17. Procédé selon la revendication 16, **caractérisé en ce que** l'âme et le(les) disque(s) posé(s) et/ou les points de joint entre des disques adjacents sont réunis par l'intermédiaire d'une couche de liaison contenant au moins 30% en volume de carbure de silicium.

18. Procédé selon la revendication 16, **caractérisé en ce que** la préforme est revêtue de tissus et/ou de tricots en fibres de carbone bidimensionnelles et/ou d'éléments en fibres de carbone unidimensionnelles.

19. Procédé selon la revendication 18, **caractérisé en ce que** le revêtement est effectué sous la forme d'un élément bobiné, l'axe de l'élément bobiné correspondant à l'axe longitudinal.

20. Procédé selon la revendication 16, **caractérisé en ce que** l'âme est garnie de segments réalisés à partir de la préforme en vue de la formation de l'élément frictionnel.
